# EUROPEAN PATENT SPECIFICATION

(11) **EP 1 385 301 B1**
(45) Date of publication and mention of the grant of the patent: **06.07.2005**
(21) Application number: 03396073.3
(22) Date of filing: 23.07.2003
(51) Int. Cl.: H04L 12/28, H04Q 7/38

(54) **Generation of user-specific setting data**
Generierung nutzerspezifischer Einstellungsdaten
Création de données de configuration spécifiques à un utilisateur

(30) Priority: 24.07.2002 FI 20021403
(43) Date of publication of application: 28.01.2004
(73) Proprietor: TeliaSonera Finland Oyj, 00510 Helsinki (FI)
(72) Inventor: Hämäläinen, Jori, 33230 Tampere (FI)
(74) Representative: Pursiainen, Timo Pekka

(56) References cited:
- EP-A- 0 912 029
- US-A- 6 031 904
- US-A1- 2002 138 758
- ASHITEY D ET AL: "INTELLIGENT PERSONAL COMMUNICATION SYSTEM" PERSONAL COMMUNICATION - FREEDOM THROUGH WIRELESS TECHNOLOGY. SECAUCUS, NJ., MAY 18 - 20, 1993, PROCEEDINGS OF THE VEHICULAR TECHNOLOGY CONFERENCE, NEW YORK, IEEE, US, vol. CONF. 43, 18 May 1993 (1993-05-18), pages 696-699, XP000393278 ISBN: 0-7803-1267-8

## Description

The invention relates to a method according to the preamble of the appended claim 1 for generation of user-specific setting data in a data processing system. In addition, the invention relates to a data processing system according to the preamble of the appended claim 6, as well as a to a control unit used in a data processing system according to the preamble of the appended claim 12.

By means of various telecommunication networks it is possible to use different services in a data network. By means of connecting different telecommunication networks to each other, it is possible to use services of another network by means of a server connected to one network. For example by means of a mobile station it is possible to use services of the Internet network by connecting a mobile network and the Internet network to each other to form a so-called mobile Internet network.

It is possible to generate setting data i.e. profiles for users in the different services provided in the telecommunication network, said profiles containing for example suitable services and settings of peripheral devices. The profiles can be generated to be shared by several users, or a user-specific profile can be generated for each user. An individual profile of one user is more convenient for the user, because the user can thus modify his or her profile freely so that it corresponds to his or her needs and preferences. In known solutions each profile holder must be determined separately in the data processing system, i.e. to be able to implement individual profiles for several users, each possible user must be determined separately in the system. Thus, to be on the safe side, unnecessary additional profiles are often generated, because all the users do not typically use all the services available, wherein the resources of the system are allocated for the maintenance of the data of these possible users.

The publication WO 0235417 discloses a solution in which a user profile is generated in advance in the system. When the user sets up a connection to a data network with a wireless terminal, a system connected to the data network searches the user-specific profile. In the solution according to the publication, each profile holder must be determined separately in the system. Furthermore, resources of the system are allocated for maintenance of these possible users.

The publication EP-A-0 912 029 discloses a telecommunications subscriber apparatus individualisation method. The individualisation method allows the subscriber apparatus to be matched to a specific user profile and/or user group, using a programming or selection procedure for selecting a required number of functions from the overall number of available functions, using push-button or speech input signals for providing a marker for each required function used as decision criteria for assembly of an individualised function menu.

The primary purpose of the present invention is to present a method for generation of user-specific settings when a user belonging to a predetermined user group for the first time sets up a connection to the server of a service provider.

To attain these purposes, the method according to the invention is primarily characterized in what will be presented in the characterizing part of the independent claim 1.

The data processing system according to the invention is primarily characterized in what will be presented in the characterizing part of the independent claim 6. The control unit used in the data processing system, in turn, is primarily characterized in what will be presented in the characterizing part of the independent claim 12.

The other, dependent claims will present some preferred embodiments of the invention.

It is an aim of the invention to reduce the workload required when establishing a user profile in a data processing system, especially in a mobile Internet system.

A service provider, such as a network operator generates a primary user for a user group, for example a company, said primary user generating a user group specific basic use profile that is utilized for generating new users. When the user for the first time sets up a connection to the data processing system, the system identifies the user group of the user on the basis of the domain identifier of the user. Thereafter the data processing system according to the invention advantageously checks the authenticity of the user from the data processing system of said user group, i.e. whether the identifier and the password of the user can be found in the data processing system of the user group.

After the identification, when the data processing system detects that the user does not have a separate individual profile in the system, a separate profile is generated for the user, and the basic user profile generated by the primary user of the user group is used as a basis for the same. This basic user profile can be modified by the user according to his or her wishes, because in the future the settings of the user are stored user-specifically.

When compared to solutions of prior art, the workload of the service provider and/or the primary user of the user group is considerably reduced, because it is not necessary for them to generate profiles for individual users separately. Furthermore, the resources of the system can be allocated more efficiently, because individual profiles are generated in the system only for actual users.

In the implementation of user identifier according to a preferred embodiment of the invention, the identification is always conducted by means of an authentication database of the user group itself, wherein the identifiers match with the identifiers of the user group, whereby it is for example necessary for the user to change the password only in the system of the user group.

In the following, the invention will be described in more detail with reference to the appended drawings, in which
- Fig. 1: shows the configuration of the system in principle, and
- Fig. 2: shows in principle the function of the system in a block diagram.

In the embodiment according to the example the data processing system, such as a mobile internet system comprises at least a terminal TE (Terminal Equipment), an interface unit GGSN (Gateway GPRS Support Node), a control unit RTM (Real Time Manager) and a connection to the Internet network IP-NET (Internet Protocol). The terminal TE, by means of which the user can use the services of the network, can be for example a computer or a mobile terminal, but advantageously the terminal is a mobile station compatible with the GPRS system (General Packet Radio Service).

The interface unit GGSN is a gateway between the GPRS network and the Internet network IP-NET, and when another telecommunication network than the GPRS network is used for connecting the terminal TE, it is typically necessary to use a different gateway instead of the interface unit GGSN, said gateway connecting the different networks together and enabling the transfer of data between the networks.

The control unit RTM is a control component of the data processing system, which for example receives the identifiers and passwords of the user, and modifies said identifier data into a suitable format.

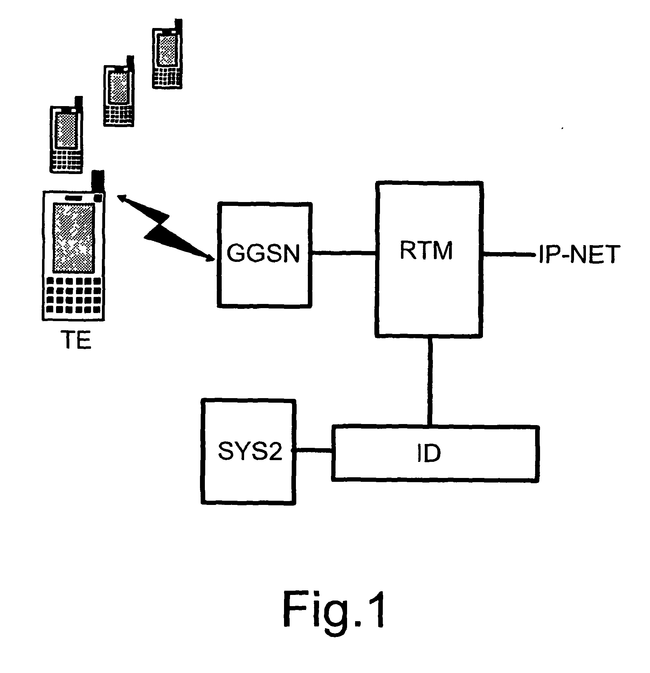

The data processing system according to the example also contains an authentication unit ID (i.e. typically an authentication database), which is advantageously a RADIUS server (Remote Authentication Dial In User Service), in which the authenticity of the identifier and the password are checked. The authentication unit ID is advantageously in the use of several data processing systems SYS2, wherein the identifier data of different systems is shared by said systems, and can be easily controlled by the user and the user group. Fig. 1 only shows one data processing system SYS2 that does not belong within the scope of the invention, but there may also be several systems connected to the shared authentication unit ID.

To the Internet network IP-NET, in turn, servers providing other services maintained and provided by different parties can be connected in addition to the control unit RTM.

In the following, the function of the system according to the invention that is presented in the example will be discussed.

It is the starting point of the system that in the data processing system the user has the possibility to use services, and if necessary, to configure services to be suitable for his or her own use. The configured services are stored in the database of the data processing system, from which they are read when the user logs in to the system. Thus, it becomes evident what kind of services the user has, and if necessary, the actuators of the network are configured according to the information.

In the data processing system it is possible to determine how the user is identified, and advantageously the identification is carried out by means of the authentication unit ID of the user group itself, i.e. typically by means of an authentication database. Thus, the identifiers match the identifiers of the user group, wherein for example when the user changes the password of the system SYS2 of the user group itself, the corresponding change in the password also affects in the data processing system according to the invention. The control and monitoring of access rights is thus also taken care of by the user group.

In its preferred example the data processing system is a hierarchical system, i.e. it consists of a number of user levels, such as a service provider, primary users of the user group and users. There can, of course, be a larger or smaller number of levels than the one mentioned above, and the names of the levels can vary. The hierarchy enables advantageous allocation of various operational rights, and by means of said hierarchy it is possible to determine for example the fact that the primary users of the user group can generate and, if necessary, modify the profile of the basic user in the system, i.e. advantageously the user group specific basic setting data. Said basic user profile is used as a basis for the profiles of other users in a manner described hereinbelow.

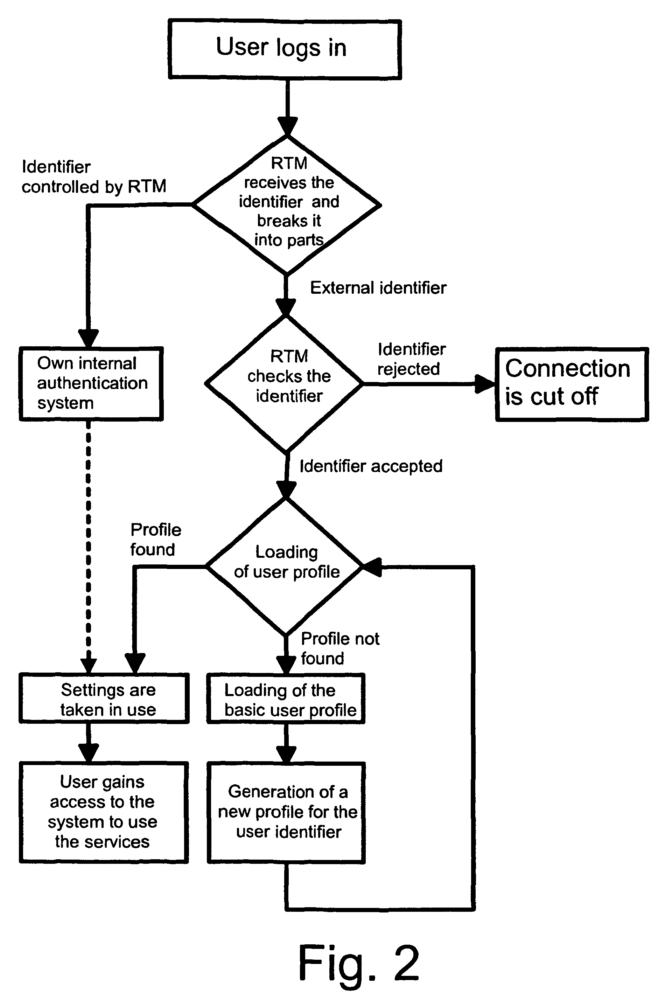

In the embodiment according to the example of Figs 1 and 2 the user sets up a connection to the data processing unit by means of a terminal TE, advantageously by means of a mobile station compatible with the GPRS system. At the first stage a connection is set up from the terminal TE to the interface unit GGSN. The terminal TE transmits to the interface unit GGSN the identifier and password entered by the user. The authentication of the identifier and the password is requested from the control unit RTM.

The control unit RTM processes the identifier in such a manner that after the processing it is known whether the identifier belongs to identifiers controlled by the control unit, or whether it belongs in the scope of external authentication (Fig. 2). If the identifier is included in the identifiers controlled by the control unit RTM, the inner authentication and security system of the control unit is used. In a preferred example, the control unit RTM utilizes the domain part of the identifier to recognize that the identifier falls in the scope of external authentication. In the external authentication of the control unit RTM, the authenticity of the identifier and the password are in the example checked from the authentication unit ID (not shown in the diagram of Fig. 2), in a preferred example from an authentication unit identified by the domain part of the identifier and controlled by the user group. If the identifier and the password are correct, the operations continue. If the identifier and the password are incorrect, the connection is typically cut off.

At the next stage the control unit RTM performs a database inquiry in order to find the profile belonging to the user as well as information on the services belonging to the user. When an individual profile belonging to the user is found, the network and the services are arranged to function with the settings configured by the user.

If the individual profile belonging to the user is not found in the databases, the profile of the basic user, i.e. the user group specific basic setting data is used according to the invention. A user is generated in the database, and the identifier entered by the user is advantageously given as an identifier for the user, and said basic user profile is copied as a profile. By means of the identifier the profile can be found in the future immediately when logging in.

Said basic user profile is generated in advance, preferably by means of the primary user of the user group. The profile is advantageously stored in the control unit RTM, but it can also be stored to another unit in other embodiments.

When the profile of the basic user is set as the user profile, the settings determined by the primary user of the user group are advantageously given to the user, and the user can use said services according to the settings immediately without having to log in to the system again. Because the profile is user-specific all the way from the beginning, i.e. it is stored user-specifically, the user can also modify the settings immediately at the first connection time, if desired.

The invention is not dependent on the physical apparatus in which the above described various actions are carried out. The above description only discloses a preferred example of the invention, but various functions can be connected to or separated from each other in a manner deviating from the above description to be carried out in one or several separate devices.

The invention is not dependent on that either by whom the different sections of the system implementing the method according to the invention are controlled. For example the terminal TE is typically controlled by the user, the interface unit GGSN is controlled by the tele-operator and the control unit RTM is controlled by the service provider. Said holders can be one holder or several separate holders, depending on the case in question.

In an example, the generation of the setting data of the users in the control unit RTM is conducted by means of a third party that is not a representative of the user group or a service provider. Thus, it is possible to advantageously generate setting data for the users automatically in the above-identified manner, with such an additional value, however, that menus and settings of several different service providers can be advantageously included in the setting data of the user via the profile of the basic user.

Naturally, it will be obvious that the invention is not limited solely to the example presented above, but it is for example possible to use a number of different devices as the terminal TE. The invention is not restricted solely to the mobile Internet system either, but the invention can also be utilized in various stationary or mobile data processing systems, wherein the terminals TE can naturally also be stationary or mobile. Furthermore, deviating from the presented example, the authentication unit ID used for identification of the user can be for example controlled by the service provider or a third party.

## Claims

1. A method for generating user-specific setting data in a data processing system, in which
- user group specific basic setting data is generated in the server (RTM), which user group is a group of specific users,
- a user belonging to a user group sets up a connection to a server (RTM),
**characterized in that** in the method at least
- the user is authenticated,
- the user group in which the user belongs to is determined,
- it is determined whether user-specific setting data can be found for the user, and
- user-specific setting data is generated for the user for whom user-specific setting data cannot be found, by using the user group specific basic setting data as a basis for the user-specific setting data.

2. The method according to claim 1, in which the data processing system comprises a server (RTM) and an authentication unit (ID), **characterized in that** the access rights of the user are checked from an external authentication unit (ID).

3. The method according to any of the preceding claims, in which at least one user group specific identifier is determined for at least one user group, **characterized in that** the user group is determined on the basis of an identifier characteristic to the user group.

4. The method according to any of the preceding claims, **characterized in that** the user is connected to the data processing system by means of a mobile station (TE).

5. The method according to any of the preceding claims, **characterized in that** in the setting data is arranged to be used and modified by the user substantially immediately.

6. A data processing system that comprises at least
- a terminal (TE), that can be used by a user in a group of specific users,
- means (GGSN) for setting up a data transmission connection between the terminal and the internet network (IP-NET), and
- at least one server (RTM) containing means for the terminal to log into the Internet network,
**characterized in that** the server (RTM) comprises at least
- means for authenticating the user in connection with the login,
- means for identifying the user group of the user in connection with the login,
- means for storing user-group specific basic setting data to the server (RTM), and
- means for using user group specific basic setting data as user's user-specific setting data for a user that does not have user-specific setting data.

7. The data processing system according to claim 6, **characterized in that** the data processing system comprises at least
- an authentication part for determining the user group of the user, and
- a control part for generating the setting data of the user.

8. The data processing system according to claim 6 or 7, **characterized in that** the data processing system comprises at least a wireless network.

9. The data processing system according to any of the preceding claims 6 to 8 that comprises an authentication database (ID) outside the system, **characterized in that** the authentication part is arranged to communicate with the external authentication database (ID) to identify the user.

10. The data processing system according to any of the preceding claims 6 to 9 that comprises a RADIUS server, **characterized in that** the authentication database (ID) is located in the RADIUS server.

11. The data processing system according to any of the claims 6 to 10, **characterized in that** the terminal (TE) is a wireless communication terminal.

12. A control unit to be used in a data processing system, in which user-specific setting data is generated when a user belonging to a user group sets up a connection to a server (RTM), which user group is a group of specific users, **characterized in that** the control unit comprises at least
- means for authenticating the user,
- means for storing basic setting data,
- means for identifying the user group of the user,
- means for determining whether user-specific setting data can be found, and
- means for generating setting data on the basis of said basic setting data, if user-specific setting data cannot be found.

13. The control unit according to claim 12, **characterized in that** the control unit is formed as one or several devices.

## Patentansprüche

1. Ein Verfahren zur Generierung von nutzerspezifischen Einstellungsdaten in einem Datenverarbeitungssystem, bei welchem
- nutzergruppenspezifische grundlegende Einstellungsdaten im Server (RTM) generiert werden, wobei die Nutzergruppe eine Gruppe von spezifischen Nutzern ist,
- ein Nutzer, der zu einer Nutzergruppe gehört, eine Verbindung zu einem Server (RTM) aufbaut,
**dadurch gekennzeichnet, dass** bei dem Verfahren mindestens
- die Berechtigung des Nutzers überprüft wird,
- die Nutzergruppe, zu welcher der Nutzer gehört, festgestellt wird,
- es festgestellt wird, ob nutzerspezifische Einstellungsdaten für den Nutzer auffindbar sind, und
- nutzerspezifische Einstellungsdaten für denjenigen Nutzer generiert werden, für den keine nutzerspezifischen Einstellungsdaten auffindbar sind, und zwar durch die Verwendung der nutzergruppenspezifischen grundlegenden Einstellungsdaten als eine Grundlage für die nutzerspezifischen Einstellungsdaten.

2. Das Verfahren gemäss Anspruch 1, bei welchem das Datenverarbeitungssystem einen Server (RTM) und eine Berechtigungsprüfungseinheit (ID) aufweist,
**dadurch gekennzeichnet, dass** die Zugangsberechtigung des Nutzers von einer externen Berechtigungsprüfungseinheit (ID) überprüft wird.

3. Das Verfahren gemäss irgendeinem der vorhergehenden Ansprüche, bei welchem mindestens ein nutzergruppenspezifisches Kennzeichen für mindestens eine Nutzergruppe bestimmt wird, **dadurch gekennzeichnet, dass** die Nutzergruppe auf der Grundlage eines Kennzeichens bestimmt wird, welches für die Nutzergruppe charakteristisch ist.

4. Das Verfahren gemäss irgendeinem der vorhergehenden Ansprüche, **dadurch gekennzeichnet, dass** der Nutzer mittels einer mobilen Station (TE) mit dem Datenverarbeitungssystem verbunden ist.

5. Das Verfahren gemäss irgendeinem der vorhergehenden Ansprüche, **dadurch gekennzeichnet, dass** die Einstellungsdaten so eingerichtet sind, dass sie vom Nutzer im Wesentlichen sofort verwendbar und modifizierbar sind.

6. Ein Datenverarbeitungssystem, welches mindestens
- einen Terminal (TE), welcher durch einen Nutzer in einer Gruppe von spezifischen Nutzern verwendbar ist,
- Mittel (GGSN) für die Erstellung einer Verbindung für die Datenübermittlung zwischen dem Terminal und dem Internet-Netzwerk (IP-NET), und
- mindestens einen Server (RTM) aufweist, welcher Mittel für das Einloggen des Terminals in das Internet-Netzwerk enthält,
**dadurch gekennzeichnet, dass** der Server (RTM) mindestens
- Mittel für die Berechtigungsprüfung des Nutzers im Zusammenhang mit dem Einloggen,
- Mittel für das Feststellen der Nutzergruppe des Nutzers im Zusammenhang mit dem Einloggen;
- Mittel für das Speichern von grundlegenden nutzergruppenspezifischen Einstellungsdaten im Server (RTM), und
- Mittel für die Verwendung von nutzergruppenspezifischen grundlegenden Einstellungsdaten für einen Nutzer, welcher keine nutzerspezifischen Einstellungsdaten hat,
umfasst.

7. Das Datenverarbeitungssystem gemäss Anspruch 6, **dadurch gekennzeichnet, dass** das Datenverarbeitungssystem mindestens
- einen Berechtigungsprüfungsteil für die Bestimmung der Nutzergruppe des Nutzers, und
- einen Steuerungsteil für die Generierung der Einstellungsdaten des Nutzers
umfasst.

8. Das Datenverarbeitungssystem gemäss Anspruch 6 oder 7, **dadurch gekennzeichnet, dass** das Datenverarbeitungssystem mindestens ein drahtloses Netzwerk umfasst.

9. Das Datenverarbeitungssystem gemäss irgendeinem der vorhergehenden Ansprüche 6 bis 8, welches eine Berechtigungsprüfungsdatenbank (ID) ausserhalb des Systems umfasst, **dadurch gekennzeichnet, dass** der Berechtigungsprüfungsteil so eingerichtet ist, dass er in der Lage ist, mit der externen Berechtigungsprüfungsdatenbank (ID) zu kommunizieren, um den Nutzer zu identifizieren.

10. Das Datenverarbeitungssystem gemäss irgendeinem der vorhergehenden Ansprüche 6 bis 9, welches einen RADIUS Server aufweist, **dadurch gekennzeichnet, dass** die Berechtigungsprüfungsdatenbank (ID) sich im RADIUS Server befindet.

11. Das Datenverarbeitungssystem gemäss irgendeinem der vorhergehenden Ansprüche 6 bis 10, **dadurch gekennzeichnet, dass** das Terminal (TE) ein drahtloses Kommunikationsterminal ist.

12. Eine Steuerungseinheit für die Verwendung in einem Datenverarbeitungssystem, in welcher nutzerspezifische Einstellungsdaten generiert werden, wenn ein Nutzer, welcher zu einer Nutzergruppe gehört, eine Verbindung mit einem Server (RTM) aufbaut, wobei die Nutzergruppe eine Gruppe von spezifischen Nutzern ist, **dadurch gekennzeichnet, dass** die Steuerungseinheit mindestens
- Mittel für die Berechtigungsprüfung des Nutzers,
- Mittel für das Speichern der grundlegenden Einstellungsdaten,
- Mittel zur Feststellung der Nutzergruppe des Nutzers,
- Mittel zur Feststellung, ob nutzerspezifische Einstellungsdaten auffindbar sind, und,
- falls nutzerspezifische Einstellungsdaten nicht auffindbar sind, Mittel für die Generierung von Einstellungsdaten auf der Grundlage der genannten grundlegenden Einstellungsdaten
umfasst.

13. Die Steuerungseinheit gemäss Anspruch 12, **dadurch gekennzeichnet, dass** die Steuerungseinheit als ein einzelnes Gerät oder als mehrere Geräte ausgebildet ist.

## Revendications

1. Une méthode pour générer de données de configuration spécifiques à un utilisateur dans un système de traitement de données, dans lequel
- des données de configuration basiques spécifiques à un groupe d'utilisateurs sont produites dans le serveur (RTM), et le groupe d'utilisateurs est un groupe d'utilisateurs spécifiques,
- un utilisateur appartenant à un groupe d'utilisateur établit une connexion à un serveur (RTM),
**caractérisée en ce que** dans la méthode au moins
- l'utilisateur est authentifié,
- le groupe d'utilisateurs auquel l'utilisateur appartient est déterminé,
- l'on a détermine si des données de configuration spécifiques à l'utilisateur peuvent être trouvées pour l'utilisateur, et
- des données de configuration spécifiques à l'utilisateur sont générées pour l'utilisateur pour lequel des données de configuration spécifiques à l'utilisateur ne peuvent pas être trouvées, en utilisant les données de configuration basiques spécifiques au groupe d'utilisateur comme base pour les données de configuration spécifiques à l'utilisateur.

2. La méthode selon la revendication 1, dans laquelle le système de traitement de données comporte un serveur (RTM) et une unité d'authentification (ID), **caractérisée en ce que** les droits d'accès de l'utilisateur sont vérifiés à partir d'une unité externe d'authentification (ID).

3. La méthode selon une des revendications précédentes, dans laquelle au moins un identifiant spécifique de groupe d'utilisateurs est déterminée pour au moins un groupe d'utilisateurs, **caractérisée en ce que** le groupe d'utilisateur est déterminé sur la base d'un identifiant caractéristique au groupe d'utilisateur.

4. La méthode selon une des revendications précédentes, **caractérisée en ce que** l'utilisateur est reliée au système de traitement de données à l'aide d'une station mobile (TE).

5. La méthode selon une des revendications précédentes, **caractérisée en ce que** dans les données de configuration sont arrangée pour être employées et modifiées par l'utilisateur pour l'essentiel immédiatement.

6. Un système de traitement de données qui comporte au moins
- un terminal (TE) qui peut être utilisé par un utilisateur dans un groupe d'utilisateurs spécifiques,
- des moyens (GGSN) pour établir une connexion de transmission de données entre le terminal et le réseau Internet (IP-NET), et
- au moins un serveur (RTM) contenant des moyens pour le terminal pour ouvrir une session dans le réseau Intemet,
**caractérisé en ce que** le serveur (RTM) comporte au moins
- des moyens pour authentifier l'utilisateur en liaison avec l'ouverture de session
- moyens pour identifier le groupe d'utilisateurs de l'utilisateur en liaison avec l'ouverture de session,
- des moyens pour stocker des données de configuration basiques spécifiques au groupe d'utilisateurs au niveau du serveur (RTM), et
- des moyens pour utiliser des données de configuration basiques spécifiques au groupe d'utilisateur comme données de configuration spécifiques à l'utilisateur de l'utilisateur pour un utilisateur qui n'a pas des données de configuration spécifiques à l'utilisateur.

7. Le système de traitement de données selon la revendication 6, **caractérisé en ce que** le système de traitement de données comporte au moins
- une partie d'authentification pour déterminer le groupe d'utilisateurs de l'utilisateur, et
- une partie de commande pour générer des données de configuration de l'utilisateur.

8. Le système de traitement de données selon la revendication 6 ou 7, **caractérisé en ce que** le système de traitement de données comporte au moins un réseau sans fil.

9. Le système de traitement de données selon une des revendications précédentes de 6 à 8 qui comporte une base de données d'authentification (ID) à l'extérieur du système, **caractérisé en ce que** la partie d'authentification est arrangée de sorte à communiquer avec la base de données d'authentification (ID) extérieure pour identifier l'utilisateur.

10. Le système de traitement de données selon une des revendications précédentes de 6 à 9 qui comporte un serveur RADIUS, **caractérisé en ce que** la base de données d'authentification (ID) est située dans le serveur RADIUS.

11. Le système de traitement de données selon une des revendications de 6 à 10, **caractérisé en ce que** le terminal (TE) est un terminal de communication sans fil.

12. Une unité de commande à utiliser dans un système de traitement de données, dans lequel des données de configuration spécifiques à l'utilisateur sont générées quand un utilisateur appartenant à un groupe d'utilisateurs établi une connexion à un serveur (RTM), et tel groupe utilisateurs est un groupe d'utilisateurs spécifiques, **caractérisée en ce que** l'unité de commande comporte au moins
- des moyens pour authentifier l'utilisateur,
- des moyens pour stocker des données de configuration basiques,
- des moyens pour identifier le groupe d'utilisateurs de l'utilisateur,
- des moyens pour déterminer si des données de configuration spécifiques à l'utilisateur peuvent être trouvées, et
- des moyens pour générer des données de configuration sur la base des dites données de configuration basiques, si des données de configuration spécifiques à l'utilisateur ne peuvent pas être trouvées.

13. L'unité de commande selon la revendication 12, **caractérisée en ce que** l'unité de commande est formée en tant qu'un ou plusieurs dispositifs.
